# EUROPÄISCHE PATENTSCHRIFT

(11) **EP 1 360 986 B1**
(45) Veröffentlichungstag und Bekanntmachung des Hinweises auf die Patenterteilung: **06.07.2005**
(21) Anmeldenummer: 03090134.2
(22) Anmeldetag: 02.05.2003
(51) Int. Cl.: B01F 7/26, C02F 3/16

(54) **Hydrodynamischer Impulsbeschleuniger**
Hydro dynamic impulse accelerator
Accélerateur d'impulsions hydrodynamique

(30) Priorität: 10.05.2002 DE 10221824
(43) Veröffentlichungstag der Anmeldung: 12.11.2003
(73) Patentinhaber: Schulz Verfahrenstechnik Gmbh, 16230 Britz (DE); Martin Bergmann Umwelttechnik, 09322 Penig (DE)
(72) Erfinder: Schulz, Reinhard Dipl.-Ing., 16230 Britz (DE); Bergmann, Martin, 09322 Penig (DE); Triller, Wolfgang Dr., 12555 Berlin (DE)
(74) Vertreter: Radwer, Dieter

(56) Entgegenhaltungen:
- DE-A- 2 714 308
- DE-U- 29 821 817
- US-A- 3 576 316
- US-A- 4 628 391

## Beschreibung

Die Erfindung betrifft einen hydrodynamischen Impulsbeschleuniger für die Durchmischung heterogener Systeme fest - flüssig, insbesondere zur Behandlung von Abwasser mit und ohne Eintrag eines zusätzlichen gasförmigen Behandlungsmediums.

Einrichtungen für die aerobe oder anaerobe Behandlung von Abwasser mit und ohne Festbett sind in den unterschiedlichsten Ausführungsformen bereits allgemein bekannt.

Für die aerobe Abwasserbehandlung werden unter anderem Vorrichtungen eingesetzt, mit denen Luft bzw. Luftsauerstoff in das zu behandelnde Abwasser eingetragen wird. Nach DE 295 06 119 U1, DE 21 64 359 A und US 3,524,629 sind diese Vorrichtungen mit einem sogenannten Belüftungskreisel ausgestattet, der mit geringer Eintauchtiefe in das zu behandelnde Abwasser eintaucht und mit inneren, in einer vertikalen Ebene gekrümmten Förderkanälen ausgestattet ist. Durch die Saugwirkung der in den Förderkanälen strömenden Flüssigkeit infolge der Drehbewegung des Belüftungskreisels entsteht an Mündungen von Verbindungskanälen ein Unterdruck, durch den über die Verbindungskanäle Luft oder ein Sauerstoffgemisch angesaugt und mit der durch die Förderkanäle strömenden Flüssigkeit vermischt wird.

Für die vollbiologische Behandlung von Abwasser sind ferner Wirbelbett-Kläranlagen bekannt, die sich durch eine hohe Effizienz bei der Abwasserbehandlung auszeichnen. Das Wirbelbett besteht aus einer Vielzahl kleiner Wirbelkörper, die den wichtigsten Bestandteil der Anlage darstellen. Im Verhältnis zu ihrer relativ kleinen Rohdichte besitzen die Wirbelkörper eine sehr große Oberfläche, auf der sich ein Biofilm für die vollbiologische Behandlung des Abwassers ausbildet. Damit der Biofilm optimal wirksam werden kann, ist eine intensive Durchmischung des Abwassers mit den im Abwasser befindlichen Wirbelkörpern erforderlich. Die Durchmischung wird auf relativ einfache Weise durch Einleitung von komprimierter Luft in das Behandlungsbecken erreicht. Die konstruktive Gestaltung des Behandlungsbeckens und die Anordnungen zur Zuführung der komprimierten Luft sind hierbei so gewählt, dass keine hydraulischen Totpunkte im Behandlungsbecken entstehen und eine intensive Durchmischung gewährleistet ist.

Für bestimmte Behandlungsprozesse, wie beispielsweise der Abbau von Nitraten bei der Abwasserreinigung, die unter Ausschluss der Aufnahme von Sauerstoff aus einem zugeführten gasförmigen Behandlungsmedium durchgeführt werden müssen, können die zu behandelnde Flüssigkeit und die den Biofilm tragenden Wirbelkörper aufgrund der Gefahr der Aufnahme von Luftsauerstoff nicht mit Hilfe verdichteter Luft durchmischt werden. Für diese Prozesse wird gegenwärtig der Einsatz von mechanischen Rührwerken und Rührsystemen vorgeschlagen. Diese Einrichtungen sind einerseits hinsichtlich ihrer Anlagekosten sehr teuer und erfordern andererseits zusätzliche Maßnahmen bezüglich ihrer Anordnung im Behandlungsbecken, damit keine hydraulischen Totpunkte entstehen und sich infolge der Drehbewegung der Rührwerke keine Strömungstromben bilden, über die ein Eintrag von Luftsauerstoff in das zu reinigende Abwasser möglich ist. In vielen Fällen sind daher umfangreiche Steuerungseinrichtungen und aufwendige Installationsanordnungen für die Ruhrwerke erforderlich, die die Betriebs- und Anlagekosten stark ansteigen lassen Die technologischen und sonstigen Vorteile, die mit der Anwendung der Wirbelbettverfahren verbunden sind, werden dadurch in starkem Maße reduziert.

Um den Eintrag von Luft in ein Mischgut über die beim Mischen von Flüssigkeiten untereinander und mit Feststoffen entstehende Strömungstrombe zu verhindern, werden bekannter Weise Trombenbrecher eingesetzt. Ein solcher Trombenbrecher in Form einer Scheibe, die auf der Welle eines Rührers verstellbar angeordnet ist, ist beispielsweise aus DE 298 21 87 U1 bekannt.

Eine Einrichtung zur Behandlung von Flüssigkeiten, insbesondere von Abwasser durch eine intensive Umwälzung und Belüftung ist ferner aus DE 27 14 308 A1 bekannt. Die hierfür vorgeschlagene Einrichtung umfasst einen kegelförmigen Rotor mit tangential angeordneten, teilweise offenen, inneren Förderkanälen, der in die zu behandelnde Flüssigkeit eintaucht und an einer angetriebenen Hohlwelle befestigt ist Durch die Hohlwelle wird Luft in eine zentrale Luftkammer, des Rotors angesaugt und während des Behandlungsprozesses kontinuierlich zugeführt. Das ausgangsseitige Ende jedes Förderkanals ist zu einer Treibdüse ausgebildet, die im Zusammenwirken mit einer Abdeckung, die die Förderkanäle teilweise übergreift, einen Wasserstahl-Ejektor bildet.

Infolge der durch die Rotation des Rotors erzeugten Zentrifugalkraft wird das in den Förderkanälen vorhandene Wasser in Richtung der Förderkanalausgänge transportiert, wobei gleichzeitig Wasser aus dem Behandlungsbecken nachgesaugt wird. Das in den Förderkanalen strömende Wasser gelangt zu den Wasserstrahl-Ejektoren am Ausgang jedes Förderkanals, wird unter Druckabfall in der Treibdüse beschleunigt und in eine Fang- und Mischkammer eingespritzt, die im Anschluss an die Treibdüse durch die geschlossene Abdeckung der Förderkanäle gebildet ist. In dieser Fang- und Mischkammer erfolgt eine intensive Vermischung von Wasser und Luft, wobei die Luft kontinuierlich, über die Hohlwelle aus der zentralen Luftkammer des Rotors zugeführt wird. Das nach intensiver Durchmischung in der Fang- und Mischkammer entstandene Luft-Wasser-Gemisch wird anschließend mit hoher Geschwindigkeit in das Behandlungsbecken ausgeworfen und strömt entlang der Seitenwande des Beckens zur Beckensohle, wo es in der Beckenmitte wieder vom Rotor angesaugt wird.

Auf Grund der konstruktiven Anordnung und Ausbildung der Förderkanäle im Rotor und seiner Arbeitsweise als Wasserstahl - Ejektor, der das Luft-Wasser-Gemisch nach intensiver Durchmischung mit einer hohen Strömungsgeschwindigkeit in das Behandlungsbecken ausstößt, kann die Einrichtung nach DE 27 14 308 A1 nicht für Abwasserbehandlung nach dem Wirbelkörper-Schwebebett-Biofilm-Verfahren nicht eingesetzt werden.

Der Erfindung liegt die Aufgabe zugrunde, eine Einrichtung der eingangs genannten Gattung anzugeben, mit der bei niedrigen Kosten eine weitgehend ideale und schonende Durchmischung von heterogenen fest/flüssige und gegebenenfalls gasförmige Anteile enthaltenden Systemen möglich ist und die sowohl für die Abwasserreinigung und Denitrifikation als auch für die heterogene Katalyse und ähnliche Anwendungen gleichermaßen einsetzbar ist.

Erfindungsgemäß wird die Aufgabe durch einen hydrodynamischen Impulsbeschleuniger nach den Merkmalen von Anspruch 1 gelost. Vorteilhafte Weiterbildungen der Erfindung ergeben sich aus den Unteransprüchen 2 bis 6.

Nach der vorgeschlagenen Lösung wird für die intensive, schonende Durchmischung der Wirbelbettkörper mit der zu behandelnden Flüssigkeit ein Laufrad mit inneren Strömungskanälen eingesetzt, das in Abhängigkeit von den Strömungsbedingungen und der konstruktiven Gestaltung des Behandlungsbeckens über eine verlängerte Antriebswelle direkt in das zu behandelnde flüssige Medium hineingeführt ist. Durch die Drehbewegung des Laufrades, das über eine Antriebswelle mit einer Antriebsquelle verbunden und intermittierend oder kontinuierlich angetrieben ist, wird die Strömungsgeschwindigkeit der Wirbelkörper und des Abwassers in den Strömungskanälen so beschleunigt, dass an den Ausströmöffnungen der Strömungskanäle, die sich vorteilhafterweise von ihrem Eingang an der Saugseite des Laufrades zu den Ausströmöffnungen allmählich erweitern, Strömungsturbulenzen im Innern der zu behandelnden Flüssigkeit entstehen. Die Strömungsturbulenzen führen, ohne die Gefahr der Bildung von sogenannten Totpunkten, innerhalb weniger Sekunden zu einer intensiven und schonenden Verwirbelung der Wirbelbettkorper mit der zu behandelnden Flüssigkeit, so dass eine weitgehend ideale Durchmischung des heterogenen Systems erreicht wird.

Um einen möglichen Eintrag von Luftsauerstoff über die sich durch die Drehbewegung des Laufrades entstehende Strömungstrombe zu verhindern, was insbesondere bei der Abwasserreinigung durch Denitrifikation von Bedeutung ist, ist auf der Antriebswelle oberhalb des Laufrades und unterhalb des Flüssigkeitsspiegels im Behandlungsbecken eine Trombenscheibe fest angeordnet, die zusammen mit dem Laufrad umläuft.

Als Antriebsquelle für den hydrodynamischen Impulsbeschleuniger wird zweckmäßigerweise ein Elektromotor mit einer ansteuerbaren Drehzahlregelung eingesetzt, der die Antriebswelle mit dem Laufrad und der Trombenscheibe direkt antreibt. Als weitere Antriebsvariante kann auch ein Elektromotor und ein entsprechendes Übersetzungsgetriebe vorgesehen werden.

Nach einem weiteren Merkmal der Erfindung erfolgt die Anordnung des Laufwerkes auf der Antriebswelle in Abhängigkeit vom Wirbelbett, wobei die Saugseite des Laufrades mit dem Eingang der Strömungskanäle jeweils auf die Wirbelkörperschicht ausgerichtet ist. Ist die Dichte der zu behandelnden Flüssigkeit größer als die Dichte der Wirbelbettkörper, wird das Wirbelbett aufschwimmen. In diesem Fall sind die Eingänge der Strömungskanäle zum Flüssigkeitsspiegel hin, d.h. auf die aufschwimmende Wirbelkörperschicht, ausgerichtet. Ist die Dichte der Wirbelbettkörper größer als die Dichte des zu behandelnden Abwassers, werden die Wirbelbettkörper sedimentieren und demzufolge die Eingänge der Strömungskanäle des Laufrades auf die auf den Boden des Behandlungsbeckens sedimentierten Wirbelbettkörper ausgerichtet.

Damit durch die Strömungsbedingungen innerhalb der Strömungskanäle der auf den Wirbelbettkörpern befindliche Biofilm nicht über das Maß seiner Selbstreinigung hinausgehend nachteilig beeinflusst wird und die Wirbelkörper selbst durch übermäßigen Abrieb nicht vorzeitig verschleißen, sollte das Verhältnis zwischen dem Stromungsquerschnitt der Strömungskanäle an den Ausströmöffnungen und dem Durchmesser der Wirbelbettkörper mindestens 3 : 1 betragen.

Erfindungsgemäß ist auf der Saugseite des Laufrades vorteilhafterweise ein Einlauftrichter vorgesehen, der die Einleitung und Zuführung der zu behandelnden Flüssigkeit und der Wirbelbettkörper in die Strömungskanäle des Laufrades unterstützt.

Mit dem hydrodynamischen Impulsbeschleuniger gemäß der vorliegenden Erfindung wird bei niedrigsten Betriebs- und Anlagekosten eine weitgehend ideale und schonende Durchmischung erreicht, die für die heterogene Katalyse, die Abwasserbehandlung und die Denitrifikation bei der Reinigung von Abwasser unter Anwendung der Wirbelbettverfahren effizient genutzt werden kann.

Die Erfindung soll nachstehend an einem Ausführungsbeispiel näher erläutert werden. In den dazugehörigen Zeichnungen zeigen.
- Fig. 1: eine schematische Darstellung des erfindungsgemäßen Impulsbeschleunigers mit einer Anordnung des Laufrades bei einer im Ruhezustand der Anlage schwebenden Wirbelkörperschicht,
- Fig. 2: die Anordnung des Laufrades bei einer im Ruhezustand der Anlage sedimentierenden Wirbelkörperschicht,
- Fig. 3: ein Laufrad mit einem an seiner Saugseite angeordneten Einlauftrichter,
- Fig. 4: die Ausbildung des erfindungsgemäßen Impulsbeschleunigers für die Anordnung und Verankerung auf dem Boden eines Behandlungsbeckens

Nach der vorgeschlagenen Lösung wird für die intensive und schonende Durchmischung des Wirbelkörperbettes 12 mit dem zu behandelnden Abwasser ein Laufrad 5 mit inneren Strömungskanälen 6 eingesetzt, das in Abhängigkeit von den Strömungsbedingungen und der konstruktiven Gestaltung des Behandlungsbeckens 1 mit relativ großer Eintauchtiefe direkt in die zu behandelnde Flüssigkeit eingesetzt ist. Durch die Drehbewegung des Laufrades 5, das über eine Antriebswelle 4 mit einer Antriebsquelle, beispielsweise einem Elektromotor 2 und einem Getriebe 14, verbunden ist und intermittierend oder ständig umlaufend angetrieben ist, wird die Strömungsgeschwindigkeit der Wirbelkörper des Wirbelbettes 12 und die die Strömungskanäle durchfließende Flüssigkeit so beschleunigt, dass an den Ausströmöffnungen 9 der Strömungskanäle 6, die sich vom Eingang 7 an der Saugseite 8 des Laufrades 5 zu den Ausströmöffnungen 8 allmählich erweitern, Turbulenzen im Innern der im Behandlungsbecken 2 befindlichen Flüssigkeit entstehen.

Durch diese Turbulenzen werden die Wirbelkörper des Wirbelbettes 12 und die zu behandelnde Flüssigkeit innerhalb weniger Sekunden intensiv durchmischt und dadurch eine weitgehend ideale und schonende Durchmischung erreicht, die beispielsweise für eine effiziente vollbiologische Abwasserbehandlung zu einem intensiven Kontakt zwischen den Reaktoren, die im Biofilm auf der Oberfläche der Wirbelbettkörper und im Wasser enthalten sind, führt.

Um einen übermäßigen Verschleiß der Wirbelbettkörper infolge der an den Wänden der Strömungskanäle 6 auftretenden Reibung zu vermeiden oder zumindest zu minimieren, ist der Strömungsquerschnitt der Strömungskanäle 6, die sich von der Saugseite 8 des Laufrades 5 zu den Ausströmöffnungen 9 allmählich erweitern, so gewählt, dass das Verhältnis zwischen dem Strömungsquerschnitt der Strömungskanäle an den Ausströmöffnungen 9 und dem Durchmesser der Wirbelbettkörper mindestens 3 : 1 beträgt.

Gemäß einem weiteren Merkmal des erfindungsgemäßen hydrodynamischen Impulsbeschleunigers ist der Eingang 7 der Strömungskanäle an der Saugseite 8 des Laufrades 5 jeweils zur Lage des Wirbelkörperbettes 12 in der zu behandelnden Flüssigkeit ausgerichtet.

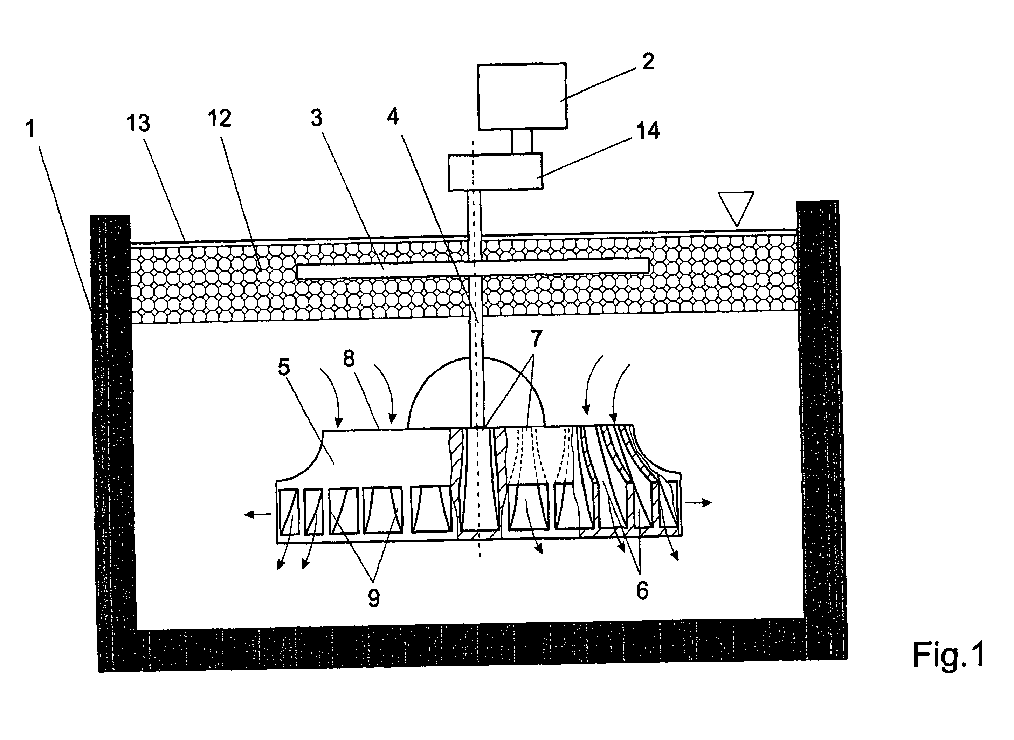

Die in Fig. 1 dargestellte Anordnung des Lüfterrades 5 auf der Antriebswelle 4 wird zur Behandlung von Flüssigkeiten eingesetzt, deren Dichte größer ist als die Dichte der Wirbelbettkörper. Im Ruhezustand der Anlage werden die Wirbelkörper aufgrund ihrer geringeren Dichte aufschwimmen und unterhalb des Flüssigkeitsspiegels 13 im Behandlungsbecken 1 das Wirbelkörperbett 12 ausbilden. Die Eingänge 7 der Strömungskanäle 6 des Laufrades 5 sind in diesem Falle zur Unterseite des schwebenden Wirbelkörperbettes 12 gerichtet.

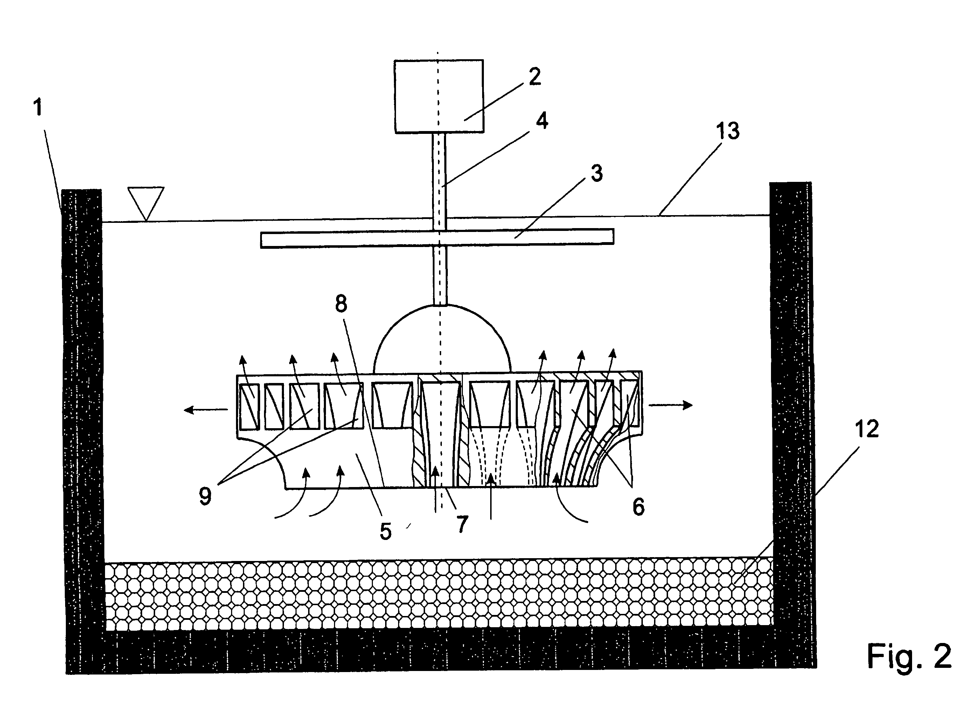

Fig. 2 zeigt die Anordnung des Laufrades 5, wenn die Dichte der Wirbelbettkörper größer ist als die Dichte der zu behandelnden Flüssigkeit und im Ruhezustand der Anlage die Wirbelkörper des Wirbelbettes auf den Boden 11 des Behandlungsbeckens 1 sedimentieren. In Übereinstimmung mit der vorgeschlagenen Lösung sind in diesem Fall die Eingänge 7 der Strömungskanäle 6 auf das sedimentierte Wirbelkörperbett ausgerichtet.

Für verschiedene Behandlungsprozesse, wie beispielsweise bei der anaeroben Abwasserbehandlung oder dem Abbau von Nitraten in der Abwasserreinigung mit Hilfe des Wirbelbettverfahrens, muss verhindert werden, dass bei der Durchmischung der zu behandelnden Flüssigkeit mit den Wirbelbettkörpern Luft eingetragen und Luftsauerstoff von der zu behandelnden Flüssigkeit aufgenommen wird. Um die mit dem Eintrag und die Aufnahme von Luftsauerstoff verbundenen Reaktionen zu verhindern, ist bei dem vorgeschlagenen hydromechanischen Impulsbeschleuniger ein Trombenbrecher 3 in Form einer einfachen umlaufenden Scheibe vorgesehen, der mit Abstand über dem Laufrad 5 und unterhalb des Flüssigkeitsspiegels 13 im Behandlungsbecken 1 angeordnet ist. Der Trombenbrecher 3 unterbindet die Entstehung von hydromechanischen Strömungstromben infolge der Drehbewegung des Laufrades 5, über die Luft bzw. Luftsauerstoff in die zu behandelnde Flüssigkeit eingetragen werden kann.

Die erfindungsgemäße Lösung kann somit bei relativ niedrigen Betriebs- und Anlagekosten für die Behandlung von Flüssigkeiten mit und ohne Zuführung eines zusätzlichen gasförmigen Behandlungsmediums eingesetzt werden, wobei durch die mit dem Laufrad 5 erzeugten Turbulenzen innerhalb der zu behandelnden Flüssigkeit das Entstehen von sogenannten Toträumen verhindert wird und hierzu keine aufwendigen konstruktiven Maßnahmen getroffen werden müssen.

Ein weiterer Vorteil der erfindungsgemäßen Lösung besteht darin, dass in einem einzigen Behandlungsbecken Behandlungsprozesse mit und ohne Zuführung eines zusätzlichen Behandlungsmediums durchgeführt werden können und für Behandlungsprozesse, bei denen die zusätzliche Aufnahme eines gasförmigen Mediums gewünscht wird, wie beispielsweise bei der aeroben Behandlung von Abwasser, lediglich der Trombenbrecher 3 auf der Antriebswelle 4 entfernt werden muss.

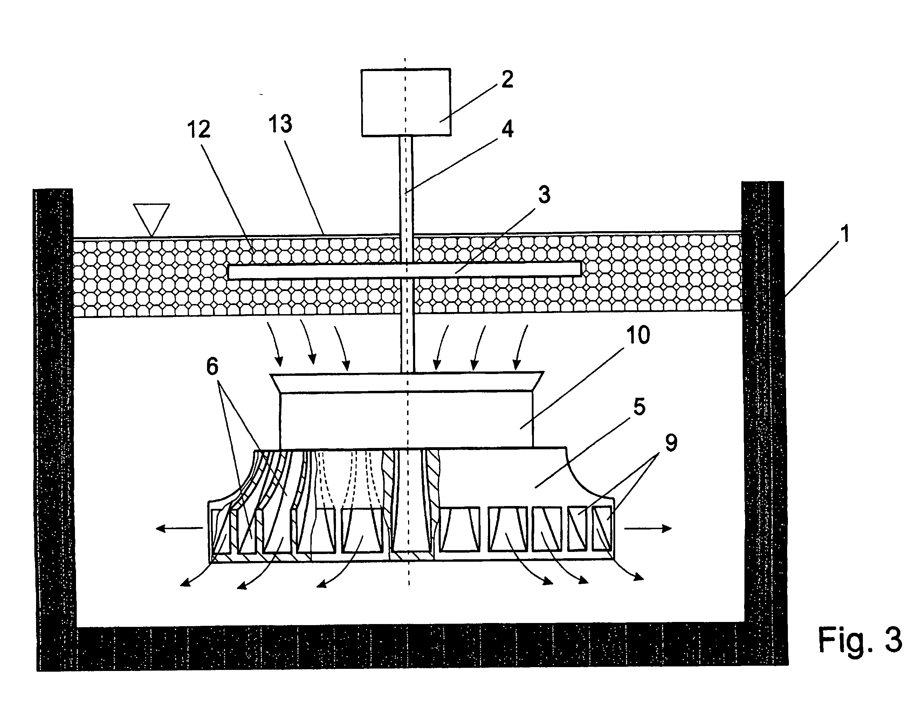

Nach Fig. 3 ist das Laufrad 5 zusätzlich durch einen Einlauftrichter 10 ergänzt, in den die Eingänge 7 der Strömungskanäle 6 einmünden. Der Einlauftrichter 10 unterstützt die Zuführung und Einleitung der Wirbelkörper des Wirbelbettes 12 und der zu behandelnden Flüssigkeit in die Strömungskanäle 6 und trägt auf diese Weise zur weitgehend idealen und schonenden Durchmischung bei.

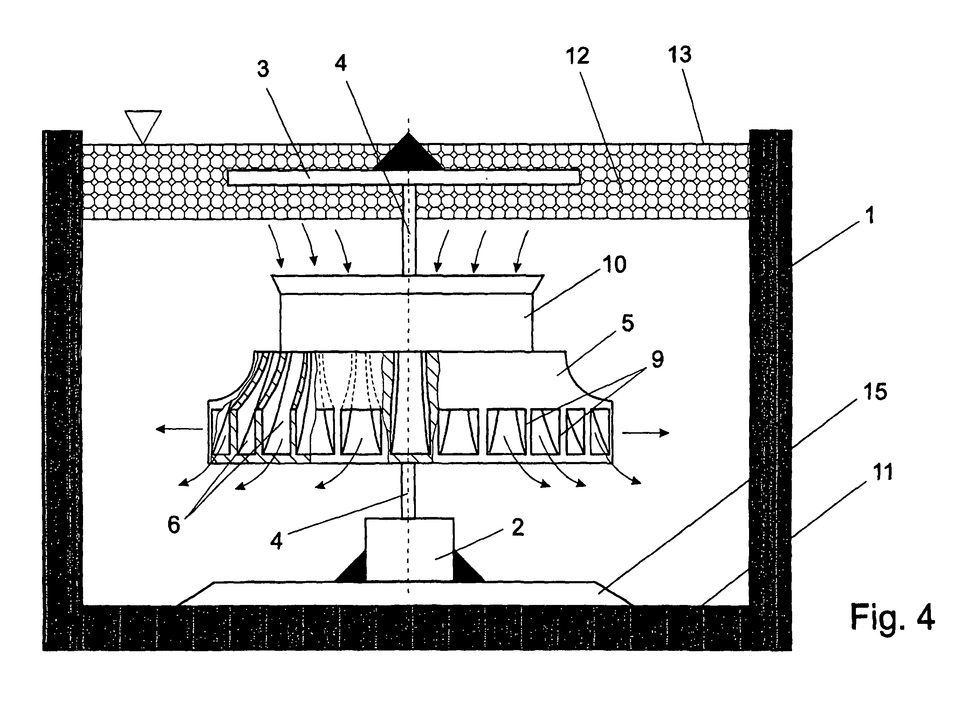

Bei der Ausgestaltung der Erfindung gemäß Fig. 4 sind die Funktionselemente des hydrodynamischen Impulsbeschleunigers - Laufrad 5, Antriebswelle 4, Einlauftrichter 10 und Trombenbrecher 3 - zusammen mit dem Motor 2 auf einer Ankerplatte 15 angeordnet, die auf dem Boden 11 des Behandlungsbeckens 1 befestigt wird. Gewünschtenfalls kann auf diese Weise mit relativ geringem Konstruktionsaufwand eine bodennahe Anordnung des hydrodynamischen Impulsgebers vorgenommen werden.

### BEZUGSZEICHENAUFSTELLUNG

- 1: Behandlungsbecken
- 2: Elektromotor
- 3: Trombenbrecher
- 4: Antriebswelle
- 5: Laufrad
- 6: Strömungskanal
- 7: Eingang
- 8: Saugseite
- 9: Ausströmöffnung
- 10: Einlauftrichter
- 11: Boden
- 12: Wirbelkörperbett
- 13: Flüssigkeitsspiegel
- 14: Getriebe
- 15: Ankerplatte

## Patentansprüche

1. Hydrodynamischer Impulsbeschleuniger für die Durchmischung heterogener, Fest/flüssig-Systeme mit einem im Ruhezustand des zu behandelnden Fest/flüssig-Systems aufschwimmenden biofilmtragenden Wirbelkörper - Schwebebett unter Verwendung eines Laufrades (5) mit integrierten Strömungskanälen (6), das über eine verlängerte Antriebswelle (4) direkt in das, in einem Behandlungsbecken (1) befindliche Fluid hineingeführt und oberhalb des Laufrades (5) ein Trombenbrecher (3) in Form einer Scheibe auf der Antriebswelle (4) angeordnet ist, **dadurch gekennzeichnet, dass** das Laufrad (5) geschlossene, innere und radial zu seinem Außenmantel geführte Stromungskanälen (6) aufweist, deren Strömungsquerschnitt sich vom Eingang (7) an der Saugseite (8) des Laufrades (5) zur Ausströmungsöffnung (9) allmählich erweitert und die so ausgebildet sind, dass das Verhältnis zwischen dem Strömungskanalquerschnitt an der Ausströmöffnung (9) und dem Durchmesser der Wirbelkörper mindestens 3 : 1 beträgt und das Laufrad (5) so auf der Antriebswelle (4) angeordnet ist, dass im Ruhezustand der Anlage die Eingänge (7) des Laufrades (5) jeweils zur aufschwimmenden Wirbelkörperschicht (12) des Schwebebettes ausgerichtet sind.

2. Hydrodynamischer Impulsbeschleuniger nach Anspruch 1, **dadurch gekennzeichnet, dass** der Impulsbeschleuniger für die Behandlung einer heterogenen Flüssigkeit mit und ohne Zuführung eines gasförmigen Behandlungsmediums in einen Behandlungsbehälter eingesetzt ist.

3. Hydrodynamischer Impulsbeschleuniger nach Anspruch 1, **dadurch gekennzeichnet, dass** der Antrieb des Laufrades (5) intermittierend erfolgt.

4. Hydrodynamischer Impulsbeschleuniger nach Anspruch 1, **dadurch gekennzeichnet, dass** ein kontinuierlicher Antrieb des Laufrades (5) vorgesehen ist.

5. Hydrodynamischer Impulsbeschleuniger nach Anspruch 1, **dadurch gekennzeichnet, dass** an der Saugseite (8) des Laufrades (5) ein Einlauftrichter (10) angeordnet ist und die saugseitigen Eingänge (7) der Strömungskanäle (6) in den Einlauftrichter (10) münden.

6. Hydrodynamischer Impulsbeschleuniger nach Anspruch 1, **dadurch gekennzeichnet, dass** der Motor (2) zusammen mit der Antriebswelle (4) und dem auf der Antriebswelle (4) befestigten Laufrad (5) auf einer Ankerplatte (15) angeordnet sind und die Ankerplatte (15) auf dem Boden (11) des Behandlungsbeckens (1) befestigt ist.

## Claims

1. Hydrodynamic pulse accelerator for mixing heterogeneous solid/liquid systems having a fluidized bed of floating suspended particles carrying biofilm in the resting state, using an impeller (5) with integral flow channels (6), which is placed directly into the fluid in a treatment basin (1) by means of an extended drive shaft (4) and having a vortex breaker (3) in the form of a disk on the drive shaft (4) above the impeller (5), **characterized in that** the impeller (5) has internal closed flow channels (6) leading radially in relation to its outer cover, the flow dimension of which increases gradually from the intake (7) at the suction side (8) of the impeller (5) to the discharge opening (9), which are made so that the ratio of the flow dimension at the discharge opening (9) to the diameter of the suspended particles is at least 3:1, and that the impeller (5) is mounted on the drive shaft (4) so that in the resting state of the system the intakes (7) of the impeller (5) are each directed toward the floating layers of suspended particles (12) of the fluidized bed.

2. Hydrodynamic pulse accelerator according to Claim 1, **characterized in that** the pulse accelerator is used to treat a heterogeneous liquid with or without introduction of a gaseous treatment medium.

3. Hydrodynamic pulse accelerator according to Claim 1, **characterized in that** the impeller (5) is driven intermittently.

4. Hydrodynamic pulse accelerator according to Claim 1, **characterized in that** there is provision for driving the impeller continuously.

5. Hydrodynamic pulse accelerator according to Claim 1, **characterized in that** an intake funnel (10) is provided on the suction side (8) of the impeller and the suction-side intakes (7) of the flow channels (6) open into the intake funnel.

6. Hydrodynamic pulse accelerator according to Claim 1, **characterized in that** the motor (2), together with the dnve shaft (4) and the impeller (5) mounted on the drive shaft (4) are arranged on an anchor plate (15) and that the anchor plate (15) is fastened to the bottom (11) of the treatment basin.

## Revendications

1. Accélérateur hydrodynamique à impulsions pour le mélange homogène de systèmes solides/liquides hétérogènes à l'aide d'un lit flottant à particules tourbillonnaires portant le biofilm et nageant à la surface du système solide/liquide à traiter au repos, utilisant une roue (5) munie de canaux d'écoulement intégrés (6) et introduite directement à l'intérieur d'un fluide se trouvant dans le bassin de traitement (1) par l'intermédiaire d'un arbre d'entraînement allongé (4), un dispositif anti-tourbillon (3) étant disposé sous forme de disque sur l'arbre d'entraînement (4) au-dessus de la roue (5), **caractérisé en ce que** la roue (5) présente des canaux d'écoulement (6) internes fermés, guidés radialement par rapport à l'enveloppe extérieure de celle-ci, dont la section d'écoulement s'élargit de plus en plus depuis l'admission (7) située du côté aspiration (8) de la roue (5) jusqu'à l'orifice de sortie (9), les canaux d'écoulement étant configurés de façon à ce que le rapport entre la section du canal d'écoulement située à l'orifice de sortie (9) et le diamètre des particules tourbillonnaires soit au moins de 3 : 1, et que la roue (5) est disposée sur l'arbre d'entraînement (4) de façon à ce que chacune des admissions (7) de la roue (5) soit dirigée vers la couche de particules tourbillonnaires (12) nageant à la surface du lit flottant lorsque l'installation est au repos.

2. Accélérateur hydrodynamique à impulsions selon la revendication 1, **caractérisé en ce que** l'accélérateur à impulsions est utilisé pour le traitement d'un liquide hétérogène avec ou sans apport d'agent de traitement gazeux dans un réservoir de traitement.

3. Accélérateur hydrodynamique à impulsions selon la revendication 1, **caractérisé en ce que** l'entraînement de la roue (5) s'effectue par intermittence.

4. Accélérateur hydrodynamique à impulsions selon la revendication 1, **caractérisé en ce qu'**il est prévu un entraînement en continu de la roue (5).

5. Accélérateur hydrodynamique à impulsions selon la revendication 1, **caractérisé en ce qu'**un entonnoir (10) est disposé du côté aspiration (8) de la roue (5) et les admissions (7) situées côté aspiration des canaux d'écoulement (6) débouchent dans l'entonnoir (10).

6. Accélérateur hydrodynamique à impulsions selon la revendication 1, **caractérisé en ce que** le moteur (2), conjointement avec l'arbre d'entraînement (4), et la roue (5) fixée sur l'arbre d'entraînement (4) sont disposés sur une plaque d'ancrage (15) et la plaque d'ancrage (15) est fixée au fond (11) du bassin de traitement (1).
